# EUROPÄISCHE PATENTANMELDUNG

(11) **EP 4 462 248 A1**
(43) Veröffentlichungstag der Anmeldung: **13.11.2024**
(21) Anmeldenummer: 23172800.7
(22) Anmeldetag: 11.05.2023
(51) Int. Cl.: G06F 8/656

(54) **VERFAHREN ZUM AKTUALISIEREN VON WENIGSTENS EINEM PROGRAMM EINER FIRMWARE EINES SCHUTZ- ODER AUTOMATISIERUNGSSYSTEMS IM BEREICH DER ELEKTROENERGIEÜBERTRAGUNG UND -VERTEILUNG**

(71) Anmelder: Siemens Aktiengesellschaft, 80333 München (DE)
(72) Erfinder: BECKER, Karsten, 15366 Neuenhagen (DE); HURRELMANN, Jonas, 13347 Berlin (DE); KIND, Roland, 14482 Potsdam (DE); KOPLIN, Kai, 14482 Potsdam (DE); LERZER, Christoph, 90584 Allersberg (DE); SOMMER, Dirk, 13053 Berlin (DE); STOLLFUSS, Marcus, 13467 Berlin (DE); POLSTER, Klaus, 90411 Nürnberg (DE); TELSCHIG, Kilian, 81543 München (DE); WIGGER, Frank, 90441 Nürnberg (DE)
(74) Vertreter: Siemens Patent Attorneys

(57) **Zusammenfassung**

Die Erfindung betrifft ein Verfahren (1) zum Aktualisieren von wenigstens einem Programm (2) einer Firmware eines Schutz- oder Automatisierungssystems im Bereich der Elektroenergieübertragung oder -verteilung, bei dem
- neben dem sich in Betrieb befindlichen zu aktualisierenden Programm (2) eine aktualisierte Version oder Konfiguration des Programms als neue Instanz (4) gestartet wird,
- die neue Instanz (4) einem Aktualisierungsprogramm (3) durch eine erste Statusmeldung (12) mitteilt, dass es zum Überleiten des Betriebs von dem zu aktualisierenden Programm (2) auf sich (4) bereit ist,
- anschließend das zu aktualisierende Programm (2) Betriebsdaten und -parameter (16) an die neue Instanz (4) überträgt,
- die neue Instanz (4) mittels einer zweiten Statusmeldung (17) und das zu aktualisierende Programm (2) mittels einer dritten Statusmeldung (18) jeweils mitteilen, dass sie zum Umschalten des Betriebs auf die neue Instanz (4) bereit sind, und
- anschließend die Umschaltung des Betriebs von dem zu aktualisierenden Programm (2) auf die neue Instanz (4) erfolgt.

## Beschreibung

Im Bereich der Elektroenergieübertragung und -verteilung dienen Umspannwerke zum Herauf- beziehungsweise Herabsetzen der im Versorgungsnetz herrschenden Netzspannung. Neben wenigstens einem Transformator weisen Umspannwerke Schalteinheiten auf, die nach Erhalt eines Schaltsignals Leiterabgänge des Umspannwerkes vom restlichen Versorgungsnetz abtrennen. Die besagten Schaltsignale werden von Schutz- und Automatisierungssystemen erzeugt, mit denen die Strom- und Spannungsverläufe in den Leitern des Umspannwerkes auf das Vorliegen von Fehlerbedingungen hin überwacht werden. Liegt eine Fehlerbedingung vor, wird ein Schaltsignal erzeugt und an eine oder mehrere ausgewählte Schalteinheiten gesendet, so dass ausgewählte Schalteinheiten in ihre Unterbrechungsstellung überführt werden. In der Unterbrechungsstellung sind die Kontakte der ausgewählten Schalteinheit voneinander getrennt. Ein Stromfluss über die Kontakte der Schalteinheit ist somit verhindert. Ein mit dem einen Kontakt der besagten Schalteinheit verbundene Leiterstrang ist dann von dem restlichen Versorgungsnetz der mit dem anderen Kontakt der besagten Leistungsschalters verbunden ist, abgetrennt.

Schutz- und Automatisierungssysteme eines Umspannwerkes weisen vom Hersteller hinterlegte Programme auf, die hier als Firmware bezeichnet werden. Die Firmware oder dessen Konfiguration bedarf von Zeit zu Zeit einer Aktualisierung. Diese Aktualisierung wird im Englischen als Update bezeichnet. Gemäß einer bisherigen weit verbreiteten Vorgehensweise wird bei einer notwendig gewordenen Aktualisierung der Firmware der Betrieb der Schutz- und Automatisierungssysteme unterbrochen. Anschließend werden die neuen Programme übertragen. Mit der neuen Firmware kann das Schutz- bzw. das Automatisierungssystem seinen Betrieb wieder aufnehmen. Dieser Vorgehensweise haftet der Nachteil an, dass der Betrieb des zu aktualisierenden Systems unterbrochen werden muss.

Bei einer anderen dem Fachmann bekannten Vorgehensweise sind Schutz- und Automatisierungssysteme redundant ausgeführt, also doppelt vorhanden. Es liegt auf der Hand, dass diese Vorgehensweise erhöhte Kosten mit sich bringt.

Aufgabe der Erfindung ist es daher, ein Verfahren zum Aktualisieren der Firmware eines Schutz- und Automatisierungssystems zu schaffen, mit dem eine Aktualisierung der Firmware oder deren Konfiguration zu geringeren Kosten ermöglicht ist, ohne den Betrieb eines mit der Firmware ausgerüsteten Systems unterbrechen zu müssen.

Die Erfindung löst diese Aufgabe durch ein Verfahren zum Aktualisieren von wenigstens einem Programm einer Firmware eines Schutz- oder Automatisierungssystems im Bereich der Elektroenergieübertragung oder -verteilung, bei dem neben dem sich in Betrieb befindlichen zu aktualisierenden Programm eine aktualisierte Version oder Konfiguration des zu aktualisierenden Programms als neue Instanz gestartet wird, die neue Instanz einem Aktualisierungsprogramm als erste Statusmeldung mitteilt, dass es zu Beginn des Übernahmeprozesses zum Überleiten des Betriebs von dem zu aktualisierenden Programm auf sich bereit ist, anschließend an die neue Instanz Betriebsdaten und -parameter des zu aktualisierenden Programms übermittelt werden, die neue Instanz mittels einer zweiten Statusmeldung und das zu aktualisierende Programm mit einer dritten Statusmeldung jeweils mitteilen, dass sie zum Umschalten des Betriebs auf die neue Instanz bereit sind und anschließend der Betrieb von der neunen Instanz übernommen wird.

Erfindungsgemäß ist vorgesehen, dass bei laufendem Betrieb der Programme der Firmware eine Instanz des aktualisierten Programms gestartet wird. Die Aktualisierung wird im Rahmen der Erfindung durch ein Aktualisierungsprogramm begleitet, wobei das Aktualisierungsprogramm eine Anwendungssoftware ist, die keinerlei Relevanz für das System hat. Die Anwendungssoftware wird im Englischen auch als Application Program bezeichnet, was mit App abgekürzt wird. Das zu aktualisierende Programm, die neue Instanz und das Aktualisierungsprogramm sind zum Austausch von Daten miteinander eingerichtet.

Zunächst wird eine Statusanmeldung von der neuen Instanz an das Aktualisierungsprogramm gesendet. Auf diese Weise wird dem Aktualisierungsprogramm mitgeteilt, dass die neue Instanz bereit ist, den Betrieb zu übernehmen. Hierfür benötigt die neue Instanz jedoch ein Bündel von Daten wie beispielsweise die Stellung der zugeordneten Schalter, das Zeitnormal, mit dem sich das Schutzsystem, für das die neue Instanz verwendet werden soll, synchronisiert hat, kürzlich erhaltene Messwerte oder dergleichen. Dieses Datenbündel muss die neue Instanz von dem zu aktualisierenden Programm erhalten, damit es den Betrieb des Schutzsystems nahtlos fortsetzen kann.

Das Aktualisierungsprogramm teilt daher dem zu aktualisierenden Programm mit, dass die neue Instanz zur Übernahme des Datenbündels bereit ist und weist darüber hinaus das zu aktualisierende Programm an, das besagte Bündel an Daten an die neue Instanz zu senden.

Das zu aktualisierende Programm teilt dem Aktualisierungsprogramm nach dem Senden der Daten mit, dass das besagte Datenbündel gesendet wurde und dass es zum Umschalten des Betriebs auf die neue Instanz bereit ist.

Nachdem die neue Instanz das besagte Datenbündel erhalten hat, teilt es dem Aktualisierungsprogramm durch Statusmeldungen mit, dass es die angeforderten Daten erhalten hat und nun zum Umschalten bereit ist. Hat das Aktualisierungsprogramm die besagten Statusmeldungen erhalten, leitet es durch Absenden entsprechender Datentelegramme an das zu aktualisierende Programm bzw. an die neue Instanz das Umschalten des Betriebs ein. Es erfolgt das Umschalten des Betriebs auf die neue Instanz, die anschließend bei laufendem Betrieb in einem Speicher des Schutz- und Automatisierungssystems gespeichert wird. Der Betrieb wird nun von der neuen Instanz, also mit der aktuellen Version des Programms, fortgesetzt.

Durch die Erfindung ist somit ein unterbrechungsfreies Aktualisieren - oder mit anderen Worten unterbrechungsfreies Update - eines Programms der Firmware eines Schutz- und Automatisierungssystems bei laufendem Betrieb des Schutzsystems ermöglicht.

Vorteilhafterweise werden alle Statusanmeldungen an das Aktualisierungsprogramm gesendet und das Umschalten des Betriebs wird von dem Aktualisierungsprogramm eingeleitet. Dies begründet eine Aufgabenteilung die sich als zweckmäßig herausgestellt hat.

Bei einer Variante des erfindungsgemäßen Verfahrens setzt das zu aktualisierende Programm nach dem Umschalten auf die neue Instanz seinen Betrieb über eine Übergangszeitdauer oder einem Übergangszeitraum hinweg fort. Sollte es bei der neuen Instanz zu Störungen kommen, ist ein Zurückschalten auf das zu aktualisierende Programm daher problemlos möglich. Mit anderen Worten handelt es sich dabei um eine Sicherheitsmaßnahme.

Weitere Vorteile ergeben sich, wenn die neue Instanz und das zu aktualisierende Programm mittels Statusmeldungen dem Aktualisierungsprogramm mitteilen, dass sie sich im Normalbetrieb befinden bzw. den Betrieb eingestellt haben. Nach Erhalt dieser Information bzw. Statusmeldungen hat das Aktualisierungsprogramm seinen Zweck erfüllt und kann ebenfalls beendet werden.

Mit seiner bevorzugten Ausgestaltung der Erfindung laufen das zu aktualisierende Programm und die neue Instanz jeweils in einem Container ab. Der Ablauf von Programmen in Containern ist dem Fachmann bekannt, womit auf eine genauere Beschreibung von Programmen in Containern verzichtet werden kann. Vorteile im Rahmen der Erfindung ergeben sich durch eine von anderen Abläufen und Programmen abgeschottete Laufzeitumgebung.

Wie bereits ausgeführt wurde sind das zu aktualisierende Programm und die neue Instanz und die Anwendungssoftware zum gegenseitigen Datenaustausch eingerichtet.

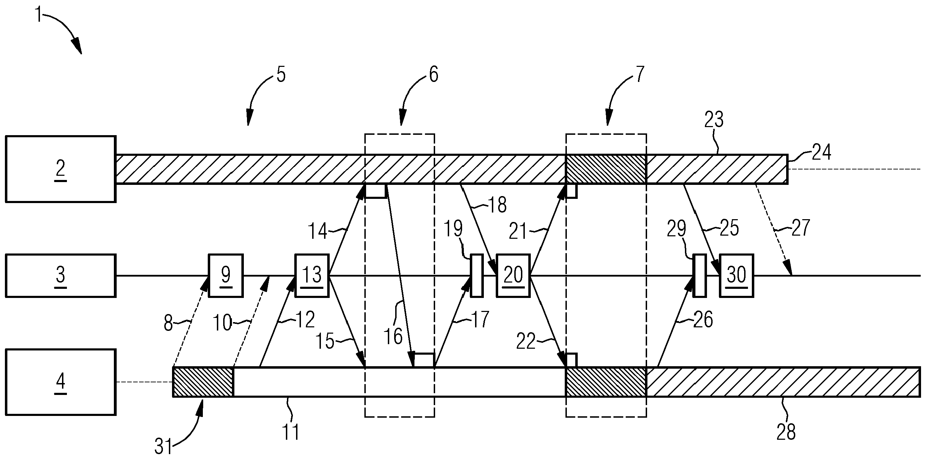

Die Erfindung wird nachfolgend anhand eines Ausführungsbeispiels unter Bezug auf die beigefügte Figur näher erläutert, wobei die
- Figur: den Ablauf eines Ausführungsbeispiels des erfindungsgemäßen Verfahrens verdeutlicht.

Die Figur verdeutlicht den Ablauf des erfindungsgemäßen Verfahrens 1 schematisch anhand eines Balkendiagramms. Das zu aktualisierende Programm ist mit dem Bezugszeichen 2 gekennzeichnet. Die neue Instanz einer aktualisierten Version des Programms trägt das Bezugszeichen 4, wobei ein Aktualisierungsprogramm mit dem Bezugszeichen 3 gekennzeichnet ist. Die Längen der sich in der Figur von links nach rechts horizontal erstreckenden Balken sollen die Zeit verdeutlichen, in der das jeweilige Programm aktiv ist.

Im Zeitraum 5 befindet sich das zu aktualisierende Programm 2 im Normalbetrieb. Das Umschalten auf die neue Instanz 4 wird über einen Zeitraum hinweg eingeleitet, der durch ein die horizontalen Balken rechtwinklig kreuzendes Rechteck 6 gekennzeichnet ist. Das senkrechte Dreieck 7 stellt den Zeitraum dar, in dem das Umschalten des Betriebs von dem zu aktualisierenden Programm 2 auf die neue Instanz 4 erfolgt.

Zunächst wird die neue Instanz 4 gestartet. Dieser Start wird dem Aktualisierungsprogramm 3 über eine Statusmeldung 8 mitgeteilt. Die Mitteilung 8 löst in dem Aktualisierungsprogramm einen neuen Status 9 aus. Am Ende einer Initialisierungsphase 31 teilt die neue Instanz 4 dem Aktualisierungsprogramm 3 über eine Statusmitteilung 10 mit, dass sie sich in ihrem Beobachtungszustand befindet. Der Beobachtungszeitraum ist in der Figur mit dem Bezugszeichen 11 gekennzeichnet.

Mit einer weiteren Statusmeldung 12 teilt die neue Instanz dem Aktualisierungsprogramm 3 mit, dass es zur Übernahme des Betriebs bereit ist. Das Aktualisierungsprogramm 3 wird damit in einen neuen Zustand 13 überführt. In dem neuen Zustand 13 setzt das Aktualisierungsprogramm 3 zwei Meldungen 14 und 15 ab, welche zum einen an das zu aktualisierende Programm 2 und zum anderen an die neue Instanz 4 gesendet werden. Durch die Statusmeldung 14 wird eine Übertragung von Daten 16 von dem zu aktualisierenden Programm 2 an die neue Instanz 4 ausgelöst. Hierbei wird ein vorbestimmtes Datenbündel übertragen, das beispielsweise die aktuellen Schalterstellungen, ein Zeitnormal, auf das sich das Schutz- oder Automatisierungssystem synchronisiert hat, die zuletzt erhaltenen Strom- bzw. Spannungswerte oder dergleichen umfasst.

Im Anschluss an diese Datenübertragung, die in dem Vorbereitungszeitraum 6 durchgeführt wird, teilt die neue Instanz 4 dem Aktualisierungsprogramm 3 durch die Statusmeldung 17 mit, dass sie zum Umschalten bereit ist. Eine entsprechende Bereitschaftsmeldung 18 erfolgt auch von dem zu aktualisierenden Programm. Hierdurch werden die Zustände 19 bzw. 20 ausgelöst, in die das Aktualisierungsprogramm 3 mittels der besagten Bereitschaftsmeldungen 17, 18 überführt wird.

Haben beide ihre Bereitschaftsmeldungen 17, 18 abgegeben, wobei die Reihenfolge unerheblich ist, löst das Aktualisierungsprogramm 4 das Umschalten durch entsprechende Anweisungsmeldungen 21 und 22 aus. In dem Umschaltzeitraum 7 erfolgt die Umschaltung des Betriebs auf die neue Instanz 4. Im Anschluss an das Umschalten läuft das zu aktualisierende Programm 2 noch eine Zeit lang über die Zeitdauer 23 hinweg weiter, bevor es im Zeitpunkt 24 endgültig abgeschaltet wird.

Zuvor teilte das zu aktualisierende Programm 2 mit der Meldung 27 dem Aktualisierungsprogramm 3 mit, dass es dabei ist, sich zu beenden. Die Statusmeldung 26, die von der neuen Instanz an das Aktualisierungsprogramm 3 gesendet wird, erfolgt, sobald die neue Instanz 4 den Betrieb übernommen und festgestellt hat, dass es unter normalen Betriebsbedingungen abläuft. Als letzte Statusmeldung 27 sendet das zu aktualisierende Programm 2. Dabei handelt es sich um eine Mitteilung an das Aktualisierungsprogramm 3 mit dem Inhalt, dass das zu aktualisierende Programm seinen Betrieb beendet.

Auf diese Weise ist eine unterbrechungsfreie Aktualisierung von Programmen einer Firmware ermöglicht.

## Patentansprüche

1. Verfahren (1) zum Aktualisieren von wenigstens einem Programm (2) einer Firmware eines Schutz- oder Automatisierungssystems im Bereich der Elektroenergieübertragung oder - verteilung, bei dem
- neben dem sich in Betrieb befindlichen zu aktualisierenden Programm (2) eine aktualisierte Version oder Konfiguration des Programms als neue Instanz (4) gestartet wird,
- die neue Instanz (4) einem Aktualisierungsprogramm (3) durch eine erste Statusmeldung (12) mitteilt, dass es zum Überleiten des Betriebs von dem zu aktualisierenden Programm (2) auf sich (4) bereit ist,
- anschließend das zu aktualisierende Programm (2) Betriebsdaten und -parameter (16) an die neue Instanz (4) überträgt,
- die neue Instanz (4) mittels einer zweiten Statusmeldung (17) und das zu aktualisierende Programm (2) mittels einer dritten Statusmeldung (18) jeweils mitteilen, dass sie zum Umschalten des Betriebs auf die neue Instanz (4) bereit sind, und
- anschließend die Umschaltung des Betriebs von dem zu aktualisierenden Programm (2) auf die neue Instanz (4) erfolgt.

2. Verfahren (1) nach Anspruch 1,
**dadurch gekennzeichnet, dass**
alle Statusmeldungen (12, 17, 18) an das Aktualisierungsprogramm (3) gesendet werden und das Umschalten des Betriebs von dem Aktualisierungsproramm (3) eingeleitet wird.

3. Verfahren (1) nach Anspruch 2,
**dadurch gekennzeichnet, dass**
das zu aktualisierende Programm (2) nach dem Umschalten für einen Übergangszeitraum (23) aktiv bleibt.

4. Verfahren (1) nach einem der vorhergehenden Ansprüche,
**dadurch gekennzeichnet, dass**
die neue Instanz (4) und das zu aktualisierende Programm (2) als dritte und vierte Statusmeldung (25, 26) dem Aktualisierungsprogramm (3) mitteilen, dass sie den Betrieb übernommen bzw. abgegeben haben.

5. Verfahren (1) nach einem der vorhergehenden Ansprüche,
**dadurch gekennzeichnet, dass**
das zu aktualisierende Programm (2) und die neue Instanz (4) jeweils in einem Container ablaufen.

6. Verfahren (1) nach einem der vorangehenden Ansprüche,
**dadurch gekennzeichnet, dass**
das Aktualisierungsprogramm (3) in einem Container abläuft.

7. Verfahren (1) nach einem der vorangehenden Ansprüche,
**dadurch gekennzeichnet, dass**
das zu aktualisierende Programm (2), die neue Instanz (2) und das Aktualisierungsprogramm (3) zum gegenseitigen Datenaustausch eingerichtet sind.
